# EUROPÄISCHE PATENTSCHRIFT

(11) **EP 0 275 948 B1**
(45) Veröffentlichungstag und Bekanntmachung des Hinweises auf die Patenterteilung: **24.08.1994**
(21) Anmeldenummer: 88100566.4
(22) Anmeldetag: 16.01.1988
(51) Int. Cl.: G02B 27/00

(54) **Anzeigevorrichtung für eine variable Betriebsgrösse von Kraftfahrzeugen**
Display device showing vehicle operating parameters
Représentation visuelle des paramètres opérationnels d'un véhicule

(30) Priorität: 19.01.1987 DE 3701359
(43) Veröffentlichungstag der Anmeldung: 27.07.1988
(73) Patentinhaber: Bayerische Motoren Werke Aktiengesellschaft, 80788 München (DE)
(72) Erfinder: Weishaupt, Walter, D-8000 München 60 (DE)
(74) Vertreter: Bullwein, Fritz

(56) Entgegenhaltungen:
- EP-A- 0 137 673
- DE-A- 2 633 067
- GB-A- 2 100 439
- US-A- 3 887 273
- US-A- 4 190 832
- US-A- 4 470 011
- COMPONENTS REPORT, Band 10, Nr. 2, Mai 1975, Seiten 52-53, Siemens AG, München, DE ; K. WETZEL : "Circuit of the day"

## Beschreibung

Die Erfindung bezieht sich auf ein Head-Up-Display. Ein Head-Up-Display mit digitaler Anzeige ist aus US-A-4190832 bekannt.

Head-Up-Displays bieten zwar den Vorteil für den Fahrzeugbenutzer, die Anzeige in seinem Sichtfeld und ohne sich vom Verkehrsgeschehen abzuwenden betrachten zu können. Sie haben aber andererseits aufgrund ihrer besonderen Ausgestaltung den Nachteil, daß sie zu einer Irritation des Fahrzeugbenutzers führen können. Dies gilt insbesondere dann, wenn die Anzeige sich relativ schnell ändert. Derartige Änderungen sind bei wichtigen Betriegsgrößen, wie beispielsweise der Fahrzeuggeschwindigkeit jedoch relativ häufig und müssen dem Fahrzeugbenutzer in der Regel ohne weiteres für die Erkennung zugänglich sein.

Der Erfindung liegt die Aufgabe zugrunde, eine Anzeigevorrichtung der eingangs genannten Art zu schaffen, die einerseits die Vorteile der Head-Up-Display-Technik aufweist, die andererseits aber auch deren Nachteile vermeidet und die darüber hinaus eine exakte Bestimmung des aktuellen Werts der dargestellten Betriebsgröße ermöglicht.

Die Erfindung löst diese Aufgabe durch die Merkmale des Patentanspruchs 1.

Wesentlich für die Erfindung ist eine zweigeteilte Darstellung der Betriebsgröße. Zum einen erfolgt diesse Darstellung relativ ruhig im Sichtfeld mit Hilfe der üblichen Head-Up-Display-Technik und zum anderen auf konventionelle Weise mit Hilfe einer außerhalb des Sichtfelds beispielsweise im Amaturenbrett angeordneten zusätzlichen Anzeigegeräts. Wendet der Fahrzeugbenutzer seinen Blick nicht vom Verkehrsgeschehen ab, so erhält er in seinem Sichtfeld die Betriebsgröße umbeweglich angezeigt und wird nur dann auf Änderungen aufmerksam gemacht, wenn sich diese wesentlich geändert haben bzw. wenn darüber hinaus oder alternativ dazu eine vorgegebene Zeitdauer abgelaufen ist. Die so angezeigte Betriebsgröße dient ihm somit stets als unveränderliche Richtschnur, die nur geändert wird, wenn dies tatsächlich erforderlich ist. Interessiert sich der Fahrzeugbenutzer für den exakten Wert dieser Betriebsgröße, so bracht er lediglich das Anzeigegerät zu betrachten, auf dem er die gewünschte Information erhält. Dies wird jedoch relativ selten der Fall sein, so daß als Ergebnis der Fahrzeugbenutzer praktisch ununterbrochen das Verkehrsgeschehen betrachten kann und gleichzeitig eine relevante Angabe über die interessierende Betriebsgröße erhält.

Ausgestaltungen der Erfindung sind auf verschiedene Weise möglich, so kann die Änderung der Anzeige im Head-Up-Display willkürlich vorgenommen werden. Der Fahrer kann beispielsweise einen entsprechend vorgesehenen Schalter bedarfsweise betätigen. Damit verbunden kann auch die Änderung der Art der dargestellten Betriebgröße sein. Eine derartige Technik ist beispielsweise von üblichen, im Bereich des Amaturenbretts angeordneten Bordcomputern unter dem Stichwort Roll-Mode bekannt.

Daneben ist es auch möglich, die angezeigte Betriebsgröße selbsttätig einzuschalten bzw. zu verändern. Ersteres bietet sich an, wenn ein kritischer Wert der Betriebsgröße erreicht ist oder wenn die Änderung dieser Betriebsgröße ein vorgesehenes Maß übersteigt. Letzteres kann in Abhängigkeit beispielsweise vom Fahrverhalten oder dem Fahrverlauf erfolgen. Dazu gehören Informationen über sicherheitsrelevante Betriebsgrößen, wie beispielsweise Lenkwinkel, Kurvenbeschleunigung oder Fahrzeuggeschwindigkeit, während bei Berücksichtigung des Fahrverlaufs, beispielsweise das Auftreten von Hindernissen in der Fahrbahn zu nennen ist. In den meisten Fällen kann die Einsteuerung der relevanten Betriebsgröße in Abhängigkeit vom Ausgangssignal eines Sensors vorgenommen werden, der die sicherheitskritische Größe bestimmt. Darüber hinaus ist es auch möglich, als Sensor eine Bilderkennungsstufe zu verwenden, die beispielsweise auf optische Zeichen am Straßenrand in Form beispielsweise von Verkehrsschildern oder dgl., anspricht.

Schließlich kann auch eine deutliche Verbesserung der Anzeige durch Berücksichtigung des Beleuchtungszustandes des Kraftfahrzeugs erzielt werden. Hierzu kann die Gegenstandsweite des virtuellen Gegenstandspunkts in Beziehung gesetzt werden zum Beleuchtungszustand. Ist beispielsweise Fernlicht eingeschaltet, so ist die Gegenstandsweite größer zu wählen als bei eingestelltem Abblendlicht. Sinnvollerweise erfolgt die Einstellung somit in einer Entfernung, die der Entfernung des ausgeleuchteten Bereichs entspricht.

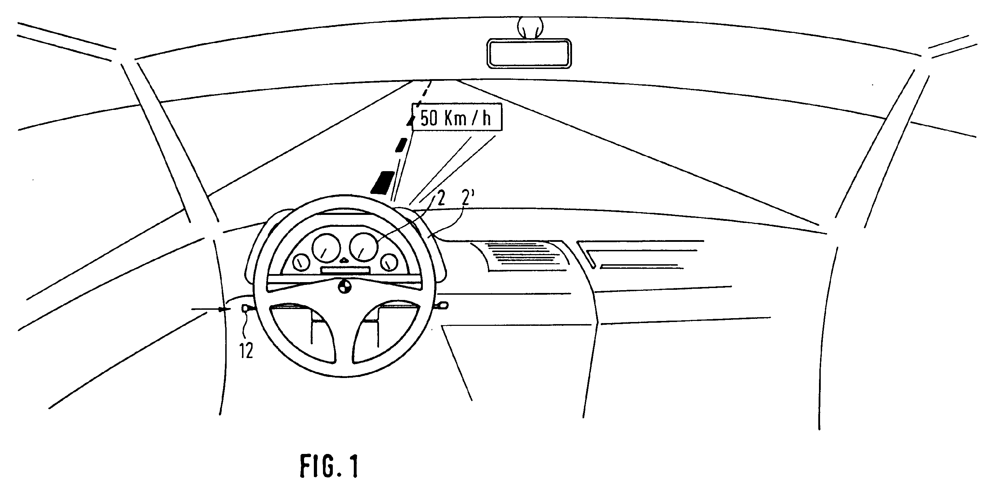

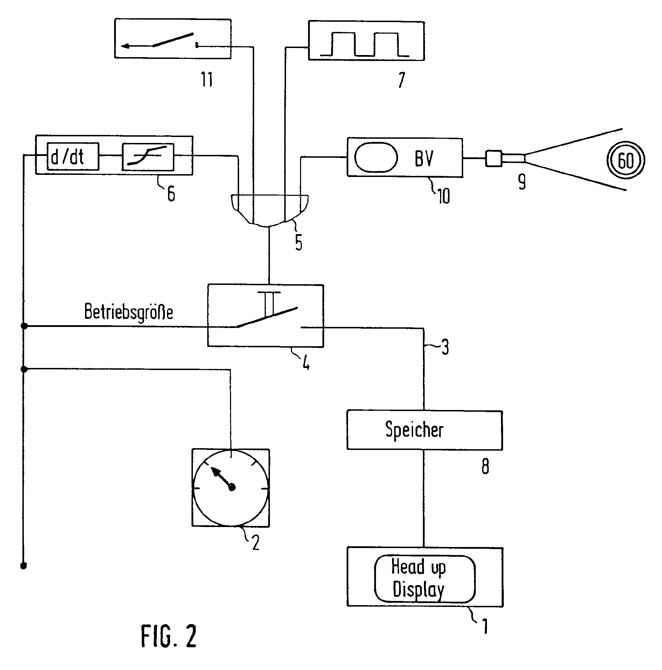

Die Erfindung ist anhand eines in der Zeichnung mit den Figuren 1 und 2 dargestellten Ausführungsbeispiels weiter erläutert.

In der Zeichnung ist die Erfindung in ihren wesentlichen Zügen dargestellt. Eine Anzeigevorrichtung für eine variable Betriebsgröße enthält ein Head-up-Display 1 sowie eine konventionelles Analog-Anzeigegerät 2 im Armaturenbrett 2′. Bei der Betriebsgröße kann es sich beispielsweise um die Geschwindigkeit eines Kraftfahrzeugs handeln. Diese wird im Anzeigegerät 2 als exakter analoger Wert dargestellt.

Im Head-Up-Display 1 wird die Betriebsgröße in abgewandelter Form wiedergegeben. Das Head-Up-Display 1 spiegelt einen für den aktuellen Wert der Betriebsgröße repräsentativen Wert im Sichtfeld des Fahrzeugbenutzers als virtuelles Bild ein. Ausführungsformen für eine derartige Anzeigetechnik finden sich beispielsweise in der DE-PS 26 33 067, in der die Erzeugung eines virtuellen Bildes ausführlich erläutert ist.

Die Abwandlung der Anzeige im Head-Up-Display 1 gegenüber bei der im Anzeigegerät 2 erfolgt auf unterschiedliche Weise. So ist es beispielsweise möglich, die Betriebsgröße nur nach Ablauf definierter Zeiträume oder bei einer Änderung zu ändern, die ein vorgegebenes Maß übersteigt. Hierzu befindet sich (vgl. Fig. 2) in der Verbindung 3 zwischen dem nicht dargestellten Geber für die Betriebsgröße und dem Head-Up-Display 1 ein gesteuerter Schalter 4, der durch ein ODER-Glied 5 beeinflußt ist. Dieses wird durch eine Differentiationsstufe 6 mit nachgeschaltetem Schwellwertschalter und einen Taktgeber 7 gesteuert. Mit Hilfe der Differentiationsstufe 6 werden die Änderungen der Betriebsgröße analysiert. Der nachgeschaltete Schwellwertschalter steuert das ODER-Glied 5 dann durch, wenn die Änderung einen vorgegebenen Wert übersteigt.

Der Taktgeber 7 steuert das ODER-Glied 5 in Abständen von beispielsweise 10 Sekunden durch, das dann in diesen Abständen den Schalter 4 schließt. Damit wird der aktuelle Wert der Geschwindigkeit auf das Head-Up-Display 1 zur Anzeige gegeben. Ein Speicher 8 wird gleichzeitig mit diesem aktuellen Wert der Betriebsgröße überschrieben und steuert die Anzeige der Betriebsgröße im Head-Up-Display 1 solange, bis der Schalter 4 erneut geschlossen wird und der bis dahin angezeigte Wert der Betriebsgröße durch den dann aktuellen Wert ersetzt wird.

Nicht dargestellt, jedoch durchaus sinnvoll ist die Möglichkeit, die Anzeige der Betriebsgröße nur in einem vorgegebenen Raster von beispielsweise 10 km/h vorzunehmen. Es werden somit die Geschwindigkeit nur in Zehner-Sprüngen angezeigt. Dazwischenliegende aktuelle Wert der Geschwindigkeit werden in üblicher Weise auf- oder abgerundet.

Ergänzend kann die Anzeige der Betriebsgröße auch in Abhängigkeit vom Ausgangssignal eines Sensors vorgenommen werden. Dabei kann es sich um einen Beschleunigungssensor, wie beispielsweise die Radialbeschleunigung des Kraftfahrzeugs oder aber um eine Bilderkennungsstufe, für beispielsweise eine von außen kommende Information in Zusammenhang mit der dargestellten Betriebsgröße handeln. Hier beispielsweise ist eine Information über eine Geschwindigkeitsbeschränkung zu nennen. In diesem Fall eins z.B. optischen Sensors 9 mit nachgeschalteter Bilderekennungsstufe 10 wird das ODER-Glied 5 ebenfalls durchgeschaltet, wenn diese Information für die angezeigte Betriebsgröße von Bedeutung ist. Der Schalter 4 wird dabei ebenfalls geschlossen und führt dazu, daß sofort der aktuelle Wert der Betriebsgröße im Head-Up-Display zur Anzeige gelangt.

Ergänzend kann die Anzeige der Betriebsgröße bzw. die Änderung dieser Anzeige auch willkürlich durch den Fahrzeugbenutzer vorgenommen werden. Hierzu ist ein manuell bedienbarer Schalter 11 vorgesehen, der das ODER-Glied 5 ebenfalls aktiviert.

Neben der gewonnen beruhigten Anzeige der Betriebsgröße im Head-up-Display kann als Ergänzung die Gegenstandsweite der Darstellung auch abhängen vom Beleuchtungszustand des Kraftfahrzeugs. Hierzu ist eine Information über den Beleuchtungszustand, beispielsweise Fernlicht bzw. Abblendlicht, dem Head-Up-Display zugeführt. Dieses wird dann entsprechend dem Beleuchtungszustand so gesteuert, daß die Betriebsgröße etwa am Ende der Leuchtweite des Kraftfahrzeugs als virtuelles Bild erscheint. Die Technik, mit der die Gegenstandsweite der dargestellten Information in einem Head-Up-Display geändert wird, ist beispielsweise wiederum der DE-PS 26 33 067 zu entnehmen.

Anstelle der Betriebsgröße Fahrzeuggeschwindigkeit ist es auch möglich, eine andere Betriebsgröße alternativ oder abwechselnd zur Betriebsgröße Fahrzeuggeschwindigkeit darzustellen. Hier zu nennen ist beispielsweise der Kraftstoffverbrauch, die zurückgelegte Wegstrecke, der Kraftstoffvorrat oder die Annäherung an ein vorgegebenes Ziel. In jedem Fall erhält der Fahrzeugbenutzer in seinem Sichtfeld eine relevante Information über die interessierende Betriebsgröße und kann darüber hinaus in einem separaten, außerhalb des Blickfelds angeordneten Anzeigegerät analog dem Anzeigegerät 2 den exakten aktuellen Wert dieser Betriebsgröße ablesen.

Die Änderung der Betriebsgrößen kann dabei, wie an sich bekannt, mit Hilfe eines Lenkstockschalters 12 (Fig. 1) vorgenommen werden.

## Patentansprüche

1. Anzeigevorrichtung für eine variable Betriebsgröße von Kraftfahrzeugen, mit einem Head-Up-Display (1), mit dem die Betriebsgröße in ein Sichtfeld des Fahrzeugbenutzers als virtuelles Bild eingespiegelt wird, mit einem außerhalb des genannten Sichtfeldes liegenden Anzeigegerät (2), das die Betriebsgröße ständig und dem aktuellen Wert entsprechend darstellt, mit einem Schalter (4), der den aktuellen Wert der Betriebsgröße auf die Anzeige des Head-Up-Displays (1) durchschaltet, mit einem Steuerglied (5), das den Schalter (4) steuert, mit einem Schwellwertschalter (6) und mit einem Taktgeber (7), wobei das Steuerglied (5) den Schalter (4) so steuert, daß der Schalter (4) die Betriebsgröße auf die Anzeige des Head-Up-Displays (1) durchschaltet, wenn entweder der Schwellwertschalter (6) das Übersteigen einer vorgegebenen Änderung der Betriebsgröße anzeigt, oder wenn der Taktgeber (7) den Ablauf eines vorgegebenen Zeitintervalls anzeigt.

2. Anzeigevorrichtung nach Anspruch 1, dadurch gekennzeichnet, daß Mittel (11) vorhanden sind mit denen der Beginn der Anzeige im Head-Up-Display (1) willkürlich wählbar ist.

3. Anzeigevorrichtung nach Anspruch 1 oder 2, dadurch gekennzeichnet, daß Mittel vorhanden sind mit denen der Beginn der Anzeige im Head-Up-Display (1) selbsttätig einstellbar ist.

4. Anzeigevorrichtung nach Anspruch 3, dadurch gekennzeichnet, daß die Anzeige abhängig vom Fahrverhalten und/oder dem Fahrverlauf einstellbar ist.

5. Anzeigevorrichtung nach Anspruch 3 oder 4, dadurch gekennzeichnet, daß die Anzeige abhängig vom Ausgangssignal eines Sensors (9) ist.

6. Anzeigevorrichtung nach Anspruch 5, dadurch gekennzeichnet, daß der Sensor (9) eine Bilderkennungsstufe ist.

7. Anzeigevorrichtung nach einem der Ansprüche 1 bis 6, dadurch gekennzeichnet, daß die Gegenstandsweite des virtuellen Gegenstandes entsprechend der Einstellung der Fahrzeugbeleuchtung veränderlich ist.

## Claims

1. A display device for displaying a variable operating parameter of motor vehicles, comprising a head-up display device (1) for reflecting or indicating the operating parameter in the form of a virtual image in the driver's field of vision, a display device (2) disposed outside the field of vision and continuously showing the operating parameter and the corresponding actual value, a switch (4) which switches the actual value of the operating parameter through to the display on the head-up display device (1), a control element (5) which actuates or controls the switch (4), a threshold switch (6) and a timer or timing generator (7), wherein the control element (5) actuates or controls the switch (4) so that the switch (4) switches the operating parameter through to the display on the head- up display device (1) if either the threshold switch (6) indicates that a preset change in the operating parameter has been exceeded or if the timer or timing generator (7) indicates that a preset time interval has elapsed.

2. A display device according to claim 1, characterised in that means (11) are provided for arbitrarily altering the beginning of the display in the head-up display device (1).

3. A display device according to claim 1 or 2, characterised in that means are provided for automatically adjusting the beginning of the display in the head-up display device (1).

4. A display device according to claim 3, characterised in that the display is adjustable in dependence on the driving conditions and/or the route.

5. A display device according to claim 3 or 4, characterised in that the display is dependent on the output signal of a sensor (9).

6. A display device according to claim 5, characterised in that the sensor (9) is a picture- recognition stage.

7. A display device according to any one of claims 1 to 6, characterised in that the distance of the virtual object is variable in dependence on the setting of the vehicle lighting.

## Revendications

1. Dispositif d'affichage pour un paramètre opérationnel variable du véhicule automobile, avec un collimateur de pilotage (1) grâce auquel le paramètre opérationnel est réfléchi sous la forme d'une image virtuelle dans un champ de vision de l'utilisateur du véhicule, avec un appareil d'affichage (2) se situant en dehors du champs de vision mentionné, et qui représente le paramètre opérationnel constamment et à la valeur actuelle, avec un commutateur (4) qui branche la valeur actuelle du paramètre opérationnel sur l'affichage du collimateur (1), avec un organe de commande (5) qui commande le commutateur (4), avec un commutateur à valeur de seuil (6) et avec un générateur d'impulsions (7), tandis que l'organe de commande (5) commande le commutateur (4) de façon que ce commutateur (4) branche le paramètre opérationnel sur l'affichage du collimateur (1), lorsque ou bien le commutateur à valeur de seuil (6) indique le dépassement d'une modification prédéfinie du paramètre opérationnel, ou bien lorsque le générateur d'impulsions (7) indique l'écoulement d'un intervalle de temps prédéfini.

2. Dispositif d'affichage selon la revendication 1, caractérisé en ce que des moyens (11) sont prévus grâce auxquels le début de l'affichage dans le collimateur (1) peut être choisi volontairement.

3. Dispositif d'affichage selon la revendication 1 ou la revendication 2, caractérisé en ce que des moyens sont prévus grâce auxquels le début de l'affichage dans le collimateur (1) est susceptible d'être réglé automatiquement.

4. Dispositif d'affichage selon la revendication 3, caractérisé en ce que l'affichage est susceptible d'être réglé en fonction du comportement de marche et/ou du parcours.

5. Dispositif d'affichage selon la revendication 3 ou la revendication 4, caractérisé en ce que l'affichage est dépendant du signal de sortie d'un capteur (9).

6. Dispositif d'affichage selon la revendication 5, caractérisé en ce que le capteur (9) est un étage d'identification d'images.

7. Dispositif d'affichage selon l'une quelconque des revendications 1 à 6, caractérisé en ce que l'éloignement de l'objet virtuel est modifiable en correspondance avec le réglage de l'éclairage du véhicule.
